# EUROPÄISCHE PATENTANMELDUNG

(11) **EP 2 366 280 A2**
(43) Veröffentlichungstag der Anmeldung: **21.09.2011**
(21) Anmeldenummer: 11001644.1
(22) Anmeldetag: 01.03.2011
(51) Int. Cl.: A01G 9/12

(54) **Vorrichtung zum Stützen und Halten von Pflanzen**

(30) Priorität: 16.03.2010 DE 102010011641
(71) Anmelder: Hanka, Georg, 47906 Kempen (DE)
(72) Erfinder: Hanka, Georg, 47906 Kempen (DE)
(74) Vertreter: Dammertz, Ulrich

(57) **Zusammenfassung**

Die Erfindung betrifft eine Vorrichtung (1) zum Stützen und Halten von Pflanzen, und umfasst eine Mehrzahl von stabförmigen Streben (2), und einen Dachbereich (3), wobei die stabförmigen Streben (2) an ihrem oberen Ende durch den Dachbereich (3) miteinander verbunden sind, wobei der Dachbereich (3) zumindest eine Schlinghilfe (6) aufweist.

## Beschreibung

Die Erfindung betrifft eine Rankhilfe in Form einer Vorrichtung zum Stützen und Halten von Pflanzen nach dem Oberbegriff von Anspruch 1.

In der Landwirtschaft oder in Gärtnereien ist es üblich, Pflanzen mit geringer Eigenstabilität durch Stäbe, Stangen oder dergleichen abzustützen. Eine solche Abstützung wird häufig bei vertikal rankenden Pflanzen eingesetzt, da diese sich ansonsten zur Seite wegbiegen würden. Zur Abstützung der Pflanzen sind sogenannte Rankhilfen bekannt, d.h. Stützvorrichtungen, mittels derer ein Stützen bzw. Halten von Pflanzen möglich ist. Solche Rankhilfen können eine Mehrzahl von Beinen bzw. stabförmige Streben aufweisen, an denen eine Pflanze hochranken kann und somit in im Wesentlichen vertikaler Richtung abgestützt bzw. gehalten wird. Falls die Streben an ihrem oberen Ende miteinander verbunden sind, bildet die Rankhilfe eine Struktur, die eine einfache Handhabung ermöglicht und selbständig standfähig ist.

Der Stand Technik zeigt in DE 663357 C1 und DE 848 285 C1 Rankhilfen bzw. Rankgestelle in Form von Bohnenstangen mit jeweils drei stangenförmigen Beine, die an ihrem oberen Ende miteinander verbunden sind. Die Rankhilfen nach diesem Stand der Technik sind für Bohnenpflanzen oder dergleichen ausgelegt, wobei die Beine dieser Rankhilfen glatt ausgebildet sind und keine Schlinghilfen aufweisen. Insoweit ist es nicht möglich, Pflanzen oder Teile hiervon gezielt mit den Beinen der Rankhilfen zu verschlingen.

DE 80 13 282 U1 zeigt eine stabförmige Rankhilfe für Kletterpflanzen oder dergleichen, in Form eines Mittelstabs. Der Mittelstab weist eine Mehrzahl von Ösen auf, die an seinen entgegengesetzten Seiten und jeweils in der Höhe versetzt zueinander ausgebildet sind. Die Ösen ermöglichen zwar ein Durchtreten von Pflanzen bzw. Teilen hiervon, so dass die Pflanze vertikal an der Rankhilfe bzw. deren Mittelstab hochranken kann. Jedoch sind die Ösen in der praktischen Handhabung umständlich, wenn die Pflanze bei der Herstellung von Hand mit dem Mittelstab verbunden werden soll. Ein weiterer Nachteil dieser Rankhilfe besteht darin, dass der Mittelstab kein raumbildendes Ranken von Pflanzen ermöglicht.

Eine weitere Rankhilfe ist aus DE 27 51 409 bekannt, in Form einer Vorrichtung zur Halterung von Pflanzen, Büschen oder dergleichen. Die Vorrichtung besteht aus einer kanalförmigen Schiene mit C-förmigen Querschnitt. Innerhalb der Schiene kann eine Mehrzahl von Schlinghilfen bzw. sogenannten Befestigungssträngen befestigt werden. Diese Befestigungsstränge bestehen aus Stäben, die mittig innerhalb des Kanals der Schiene befestigt sind und zu beiden Seiten der Schiene abragen. Entsprechend ist es möglich, Pflanzen oder Teile hiervon um die Befestigungsstränge herumzulegen oder einzuhängen, damit die Pflanzen gezielt an der Schiene hochranken. Die Rankhilfe nach diesem Stand der Technik ist insoweit nachteilig, als dass die separate Bereitstellung der Schiene und der Mehrzahl der Befestigungsstränge kostspielig und bei der Montage umständlich ist.

Entsprechend besteht die Aufgabe der Erfindung darin, eine Rankhilfe zu schaffen, die mit einfachen und preiswerten Mitteln die Möglichkeiten für ein Halten bzw. Stützen von Pflanzen verbessert.

Diese Aufgabe wird durch eine Vorrichtung mit den Merkmalen von Anspruch 1 gelöst. Vorteilhafte Weiterbildungen der Erfindung sind Gegenstand der abhängigen Ansprüche.

Eine erfindungsgemäße Vorrichtung zum Stützen und Halten von Pflanzen umfasst eine Mehrzahl von stabförmigen Streben und einen Dachbereich, wobei die stabförmigen Streben an ihrem oberen Ende durch den Dachbereich miteinander verbunden sind. Der Dachbereich weist zumindest eine Schlinghilfe auf.

Die erfindungsgemäße Vorrichtung bildet eine sogenannte Rankhilfe, mit der sich Pflanzen oder Teile davon stützen bzw. halten lassen. Durch die stabförmigen Streben werden die Beine einer solchen Rankhilfe gebildet. Der Erfindung liegt die Erkenntnis zu Grunde, dass eine Pflanze gezielt über den Dachbereich hinweg von einem Bein zu einem anderen Bein der Rankhilfe geschlungen werden kann, indem der Dachbereich zumindest eine Schlinghilfe aufweist. Ein Verwachsen der Pflanze mit dem Dachbereich führt dazu, dass dieser von einem Betrachter ohne Weiteres nicht mehr wahrgenommen wird. Im Ergebnis kann dies dazu führen, dass die Rankhilfe als Ganzes für den Betrachter nicht mehr erkannt wird, wobei die Formgebung der Rankhilfe dann das Erscheinungsbild der damit verwachsenen Pflanze definiert.

Im Sinne der Erfindung wird als Schlinghilfe jegliche Formgebung verstanden, die sich für ein Verschlingen bzw. Verranken mit einer Pflanze oder Teilen davon eignet. Eine solche Schlinghilfe kann T-förmig oder in Form eines winkelförmigen Hakens oder dergleichen ausgebildet sein. Alternativ sind auch andere Formgebungen für eine solche Schlinghilfe möglich. Jedenfalls ermöglicht die Schlinghilfe ein gezieltes bzw. definiertes Halten der Pflanze, wenn diese um die Schlinghilfe herum gerankt bzw. verschlungen wird. Die Formgebung der Schlinghilfe ist dabei so gewählt, dass ein Verschlingen der Pflanze mit der Schlinghilfe von Hand in sehr kurzer Zeit und mit wenigen Handgriffen oder gar nur einem Handgriff möglich ist.

In vorteilhafter Weiterbildung der Erfindung kann eine stabförmige Strebe, d.h. ein Bein der Rankhilfe ebenfalls zumindest eine Schlinghilfe aufweisen. Zweckmäßigerweise sind an jedem Bein der Rankhilfe und auch an ihrem Dachbereich eine Mehrzahl von Schlinghilfe vorgesehen. Somit ist ein lückenloses Verschlingen einer Pflanze mit der Rankhilfe sowohl an ihren Beinen als auch an bzw. in ihrem Dachbereich möglich.

Ein problemloses und einfaches Verschlingen einer Pflanze mit der Rankhilfe bzw. deren Schlinghilfen ist dadurch gewährleistet, dass ein Schenkel der Schlinghilfe von dem Dachbereich oder einem Bein der Rankhilfe im wesentlichen senkrecht abragt. Durch diesen Abstand ist ein Herumlegen der Pflanze um den abragenden Schenkel möglich. Ein Ende des Schenkels ist zumindest in einer Richtung abgewinkelt, so dass dadurch die Pflanze geeignet gehalten wird.

In vorteilhafter Weiterbildung der Erfindung kann die Rankhilfe an einem unteren freien Ende zumindest eines ihrer Beine einen Befestigungsanker aufweisen, der zur Verankerung im Erdreich dient. Sofern das Bein mit einem solchen Befestigungsanker zuvorderst in Erdreich gesteckt wird, verhindert der Befestigungsanker ein selbsttätiges bzw. unbeabsichtigtes Herauslösen des Beins aus dem Erdreich. Zu diesem Zweck ist der Befestigungsanker in Form eines Widerhakens ausgebildet, der sich mit geringem Widerstand in nur einer Richtung in Erdreich bzw. Erde einführen lässt. Der Widerhaken kann zumindest einen Steg aufweisen, der von einem unteren Ende des Beins in einem stumpfen Winkel in Richtung des oberen Endes des Beins abragt.

In vorteilhafter Weiterbildung der Erfindung können alle Beine der Rankhilfe an ihren unteren freien Enden mit solchen Befestigungsankern versehen sein. Im Ergebnis kann die Rankhilfe in Erdreich hineingesteckt werden, wobei sie dort dank der Befestigungsanker zuverlässig verankert bleibt. Wenn eine Pflanze mit der Rankhilfe verbunden ist, schützen die Befestigungsanker auch vor einem unbeabsichtigten Entwurzeln der Pflanze, weil die Rankhilfe sicher im Erdreich verankert ist.

In vorteilhafter Weiterbildung der Erfindung kann der Dachbereich der Rankhilfe aus einer Mehrzahl von Stegen gebildet sein, die einenends mit einem jeweiligen Bein der Rankhilfe und anderenends miteinander verbunden sind. Der Durchmesser dieser Stege ist derart gewählt, dass sich die Stege relativ zueinander elastisch verformen lassen. Entsprechend können die Beine der Rankhilfe ohne Weiteres auseinander gespreizt werden, um der Rankhilfe einen selbsttätigen und sicheren Stand auf einem Untergrund zu verschaffen. In diesem Zusammenhang versteht sich, dass die Beine der Rankhilfe vorzugsweise gleich lang ausgebildet sind.

In vorteilhafter Weiterbildung der Erfindung kann die Rankhilfe vollständig aus Kunststoff hergestellt sein, vorzugsweise durch Spritzgießen. Hierdurch ist eine preisgünstige Massenherstellung möglich, wobei eine Nachbearbeitung der spritzgegossenen Teile nicht erforderlich ist. Durch das Spritzgießen aus Kunststoff kann die Rankhilfe mit allen ihren vorstehend genannten Elementen einstückig hergestellt werden. Entsprechend entfällt eine Montage von separaten Elementen. Des weiteren wird die Elastizität der Stege im Dachbereich der Rankhilfe durch den Kunststoff verbessert, so dass ein Aufspreizen der Beine ohne große Kraft möglich ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist nachfolgend anhand einer Ausführungsform in der Zeichnung schematisch dargestellt und wird unter Bezugnahme auf die Zeichnung ausführlich beschrieben.

Es zeigen:
- Figur 1: eine Perspektivansicht einer erfindungsgemäßen Vorrichtung mit auseinander gespreizten Beinen,
- Figur 2: den Bereich 1 von Figur 1 in vergrößerter Darstellung, zur Darstellung eines Dachbereichs der Vorrichtung,
- Figur 3: eine Vorderansicht der Vorrichtung von Figur 1 in einem Ausgangszustand nach der Herstellung,
- Figur 4: eine Ansicht der Vorrichtung von Fig. 3 von der Seite,
- Figur 5: den Bereich 11 von Figur 3 in vergrößerter Darstellung,
- Figur 6: den Bereich 111 von Figur 3 in vergrößerter Darstellung, und
- Figur 7: eine Perspektiveansicht der erfindungsgemäßen Vorrichtung von Fig. 1 in Verbindung mit einer Topfpflanze.

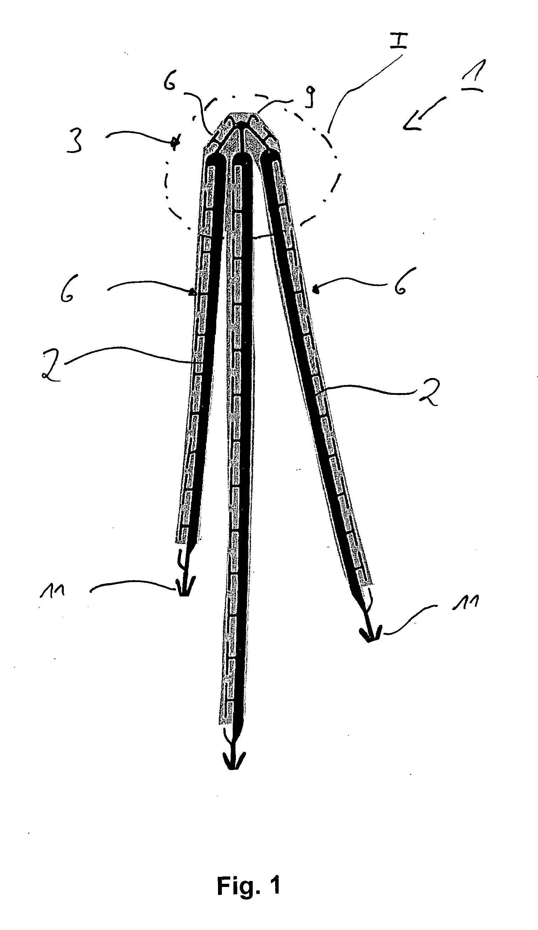

Figur 1 zeigt eine Perspektivansicht einer erfindungsgemäßen Vorrichtung 1, die nachstehend als Rankhilfe bezeichnet wird. Die Rankhilfe 1 weist drei Beine 2 auf, die als stabförmige Streben ausgebildet sind. Die Beine 2 sind an ihrem oberen Ende durch einen Dachbereich 3 miteinander verbunden. Die Beine 2 sind im wesentlichen gleich lang, wobei sie in der Position von Fig. 1 auseinander gespreizt gezeigt sind. In dieser Weise kann die Rankhilfe 1 auf einem Untergrund aufgestellt werden, ohne dabei umzufallen.

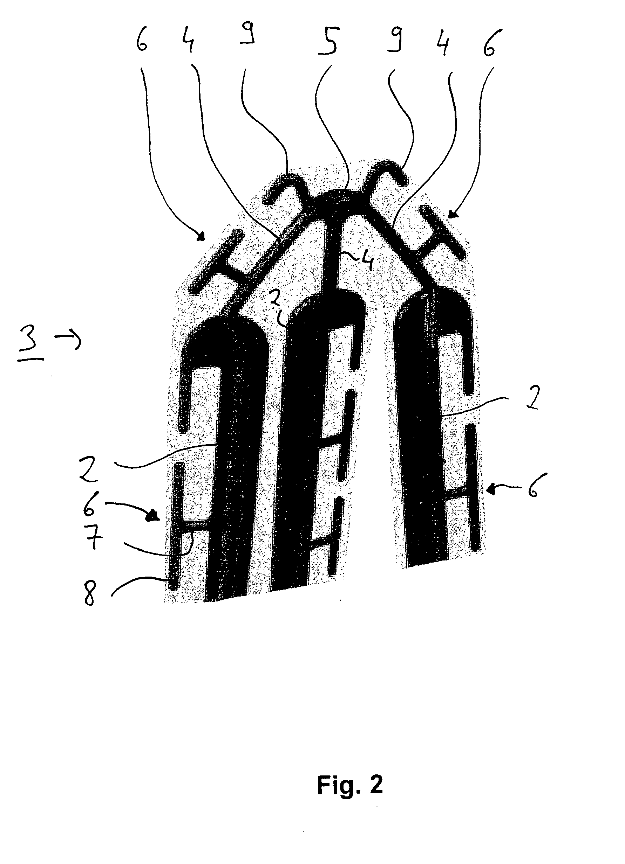

Der Dachbereich 3 der Rankhilfe 1 ist in Fig. 2 gezeigt, die den Bereich I von Fig. 1 vergrößert darstellt. Der Dachbereich 3 weist in Entsprechung der Anzahl von Beinen 2 drei Stege 4 auf, die einenends mit einem jeweiligen Bein 2 und anderenends durch eine Verbindungsstelle 5 miteinander verbunden sind. Der Dachbereich 3 bzw. seine Stege 4 sind derart beschaffen, dass die Stege 4 relativ zueinander elastisch verformt werden können, damit sie sich auseinander spreizen lassen. Durch ein solches Auseinanderspreizen kann die Rankhilfe 1 in ihre Position gemäß Fig. 1 überführt und stabil auf einem Untergrund aufgestellt werden.

Die Beine 2 und der Dachbereich 3 weisen jeweils eine Mehrzahl von so genannten Schlinghilfen 6 auf. Diese Schlinghilfen 6 sind T-förmig ausgebildet, und bestehen aus einem mittigen Schenkel 7 und einem Stab 8. Der mittige Schenkel 7 ragt im wesentlichen vertikal von einer Oberfläche eines Beins 2 bzw. einem Steg 4 des Dachbereichs 3 ab, wobei an einem Ende des mittigen Schenkels 7 der Stab 8 angeformt ist. Der Stab 8 erstreckt sich mit seiner Längsachse im wesentlichen parallel zur Oberfläche eines Beins 2 bzw. eines Stegs 4 des Dachbereichs 3. Bedingt durch den mittigen Schenkel 7 ist der Stab 8 einer jeweiligen Schlinghilfe 6 von der Oberfläche eines Beins 2 bzw. eines Stegs 4 beabstandet. Hierdurch ist ein Verschlingen bzw. ein Herumranken einer Pflanze bzw. von Teilen dieser Pflanze um die Schlinghilfe 6 herum in einfacher Weise von Hand möglich.

Die Darstellung von Figur 1 verdeutlicht, dass eine Mehrzahl von Schlinghilfen 6 an den Beinen 2 ungefähr im gleichen Abstand zueinander angeordnet sind.

Zumindest zwei Stege 4 des Dachbereichs 3 weisen ebenfalls eine Schlinghilfe 6 in T-Form auf. Zusätzlich sind in dem Dachbereich 3 angrenzend an dessen Verbindungsstelle 5 weitere Schlinghilfen 9 in Form eines Hakens ausgebildet. Ein Haken 9 ragt von einem jeweiligen Steg 4 im Wesentlichen senkrecht ab und ist an seinem freien Ende abgewinkelt. Die Haken 9 eignen sich sich in gleicher Weise wie die T-förmige Schlinghilfe 6 für ein Herumranken einer Pflanze, um diese zu halten.

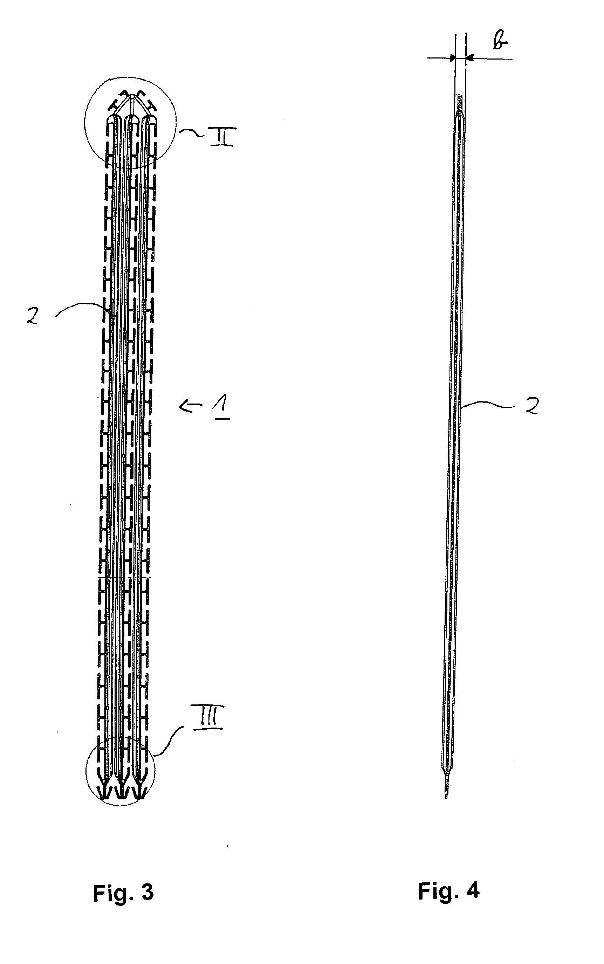

Die Rankhilfe 1 kann zweckmäßigerweise durch Spritzgießen eines Kunststoffs hergestellt werden. Dies ermöglicht eine preiswerte Massenherstellung, wobei eine Nachbearbeitung der spritzgegossenen Teile nicht erforderlich ist. Figur 3 zeigt eine Rankhilfe 1 in einem Ausgangszustand nach ihrer Herstellung. Es ist zu erkennen, dass die drei Beine 2 angrenzend zueinander parallel verlaufen. Figur 4 zeigt die Rankhilfe 1 in einer Ansicht von der Seite, d.h. wenn die Rankhilfe 1 von Fig. 3 um 90° um ihre Längsachse gedreht ist. Figur 4 verdeutlicht, dass eine Breite b der Beine 2 relativ klein ist. In dem Ausgangszustand von Fig. 3 bzw. Fig. 4 beansprucht die Rankhilfe 1 lediglich wenig Raum, so dass sie in diesem Zustand gut stapelbar ist beziehungsweise platzsparend verpackt werden kann.

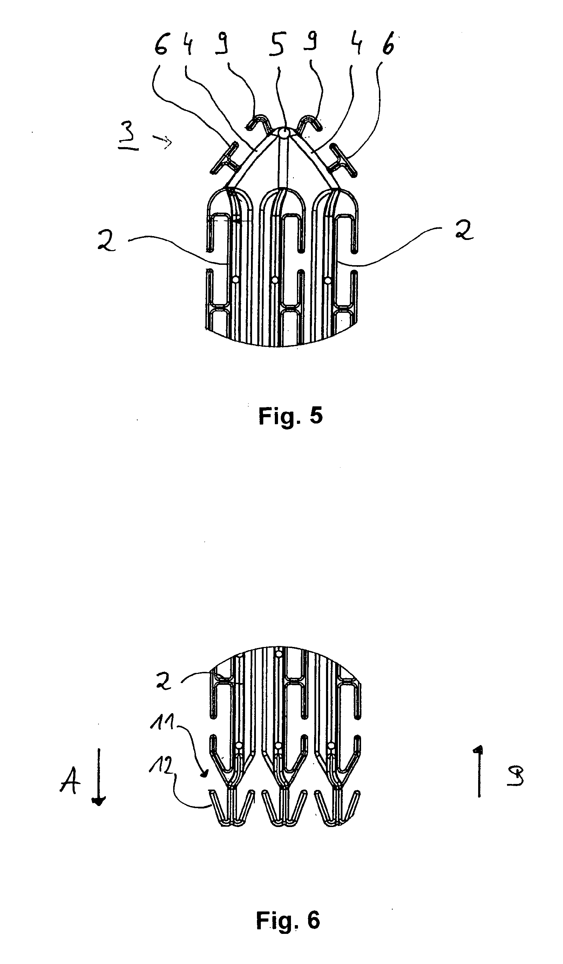

In den Figuren 5 und 6 sind weitere Details der Rankhilfe 1 gezeigt. Figur 5 zeigt den Bereich 11 von Fig. 3, nämlich den Dachbereich 3 der Rankhilfe 1. Wie vorstehend bereits erläutert, sind die Beine 2 durch die Stege 4 über die Verbindungsstelle 5 miteinander verbunden. An zumindest zwei Stegen 4 ist jeweils eine T-förmige Schlinghilfe 6 angeordnet, wobei angrenzend an die Verbindungsstelle 5 zwei Haken 9 angeordnet sind. Somit weist der Dachbereich 3 eine Mehrzahl von Schlinghilfen 6, 9 auf, wodurch ein Herumschlingen einer Pflanze über den Dachbereich 3 von einem Bein zu einem benachbarten Bein möglich ist. Dies ist nachstehend noch im Detail erläutert.

Figur 6 zeigt den Bereich III von Fig. 3, nämlich ein unteres Ende der Beine 2. An jedem Bein 2 ist an seinem unteren Ende einen Befestigungsanker 11 in Form eines Widerhakens ausgebildet. Der Widerhaken 11 weist zwei Stege 12 auf, die sich von dem unteren Ende eines jeweiligen Beins 2 in einem kleinen spitzen Winkel nach oben, d.h. in Richtung des oberen Endes eines Beins 2 erstrecken. Somit weist der Widerhaken 11 eine Pfeilung auf. Infolge dessen können die Beine 2 in Richtung des Pfeils A (Fig. 6) mit geringem Widerstand in Erdreich eingesteckt bzw. eingeführt werden, wobei durch den Widerhaken 11 ein Herausbewegen der Beine 2 aus dem Erdreich in entgegengesetzter Richtung (Pfeil B, vgl. Fig. 6) erschwert bzw. nicht möglich ist. Anders ausgedrückt, bewirken die Widerhaken 11 ein sicheres Verankern der Beine 2 in einem Erdreich, Blumenerde oder dergleichen.

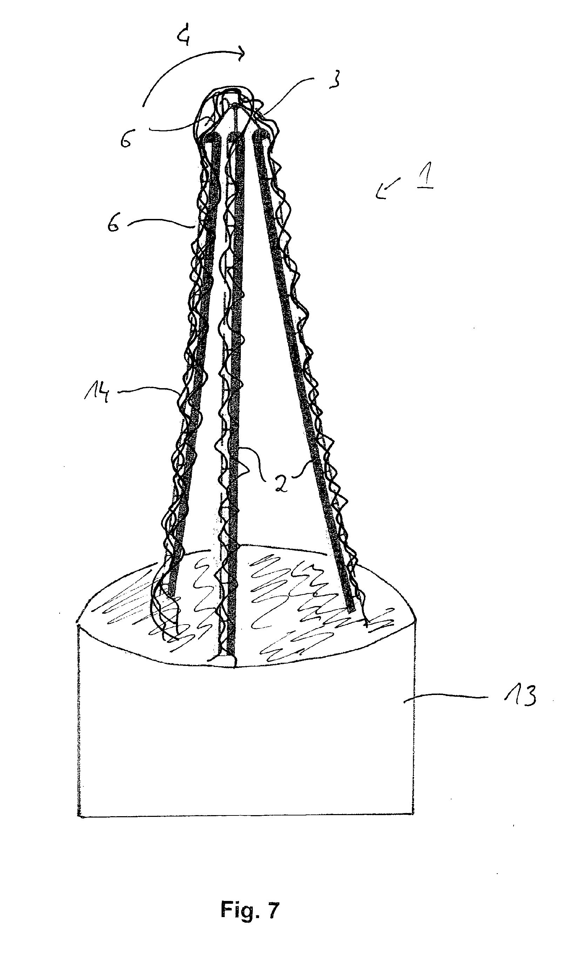

Nachstehend ist unter Bezugnahme auf Figur 7 eine beispielhafte Verwendung der Rankhilfe 1 im Detail erläutert.

Mit Bezugszeichen 13 ist vereinfacht ein Blumentopf gezeigt, der mit Erde gefüllt ist. Die Beine 2 der Rankhilfe 1 sind mit ihren unteren Enden in die Erde des Blumentopfes 13 hineingesteckt. Durch die Widerhaken 11 an den unteren Ende der Beine 2 ist die Rankhilfe 1 sicher in der Erde des Blumentopfes 13 verankert und gegen ein Herausbewegen gesichert.

In den Blumentopf 13 ist eine Pflanze eingepflanzt, wobei einzelne Triebe der Pflanze aus der Erde nach oben herauswachsen. Mit dem Bezugszeichen 14 sind beispielhaft einzelne Triebe der Pflanze bezeichnet, die an dem in Figur 7 links gezeigten Bein 2 hochranken. Die Triebe 14 sind durch die Schlinghilfen 6 an dem Bein 2 gehalten. Durch den geringen Abstand der Schlinghilfen 6 zueinander können die Triebe 14 derart an dem Bein 2 befestigt bzw. gehalten sein, dass sie nicht von dem Bein 2 abstehen bzw. abranken. Bei der Herstellung einer solchen Topfpflanze ist dies deshalb von Vorteil, weil überschüssige Triebe, die ggf. von dem Bein 2 abstehen, nicht von Hand abgeschnitten werden müssen, sondern einfach mit einer angrenzenden nächsten Schlinghilfe 6 verbunden werden können. Dies verkürzt deutlich die Herstellungszeit einer solchen Topfpflanze, wenn die Triebe 14 mit der Rankhilfe 1 zu verbinden sind.

Durch den Pfeil C ist in Figur 7 angedeutet, dass die Triebe 14 über den Dachbereich 3 hinweg zu einem benachbarten Bein 2 herum gebunden werden können. Ein Befestigen bzw. Verranken der Triebe 14 mit dem Dachbereich 3 ist durch die Schlinghilfen 6, 9 möglich, die in dem Dachbereich 3 vorgesehen sind. Entsprechend können Triebe 14 der Pflanze an einem Bein 2 der Rankhilfe 1 hochranken, und durch ein Herumschlingen über den Dachbereich 3 an einem benachbarten Bein 2 wieder herunter ranken. Die Schlinghilfen 6, 9 an den Beinen 2 und an dem Dachbereich 3 stellen dabei insgesamt ein gepflegtes Erscheinungsbild der Topfpflanze sicher, da deren Triebe 14 dicht an den Beinen 2 bzw. an dem Dachbereich 3 gehalten sind.

Die Rankhilfe 1 definiert ein räumliches Erscheinungsbild für die Triebe 14 der Topfpflanze. Bei fortgeschrittenem Wachstum der Topfpflanze ist die Rankhilfe 1 als solche kaum mehr zu erkennen, da sie durch die Triebe 14 der Pflanze vollständig verdeckt ist.

In Abwandlung zur Darstellung von Figur 7 versteht sich, dass die Rankhilfe 1 nicht nur in Verbindung mit Topfpflanzen, sondern auch für andere stationäre Pflanzen im Garten- oder Landschaftsbau eingesetzt werden kann. Des weiteren versteht sich, dass die Rankhilfe 1 in Abwandlung der Darstellung von Figur 1 mehr oder weniger als drei Beine 2 aufweisen kann, zum Beispiel insgesamt vier Beine.

## Patentansprüche

1. Vorrichtung (1) zum Stützen und Halten von Pflanzen, umfassend
eine Mehrzahl von stabförmigen Streben (2), und
einen Dachbereich (3), wobei die stabförmigen Streben (2) an ihrem oberen Ende durch den Dachbereich (3) miteinander verbunden sind, **dadurch gekennzeichnet, dass**
der Dachbereich (3) zumindest eine Schlinghilfe (6) aufweist.

2. Vorrichtung (1) nach Anspruch 1, **dadurch gekennzeichnet, dass** zumindest eine stabförmige Strebe (2) zumindest eine Schlinghilfe (6) aufweist.

3. Vorrichtung (1) nach Anspruch 1 oder 2, **dadurch gekennzeichnet, dass** die Schlinghilfe (6) einstückig mit dem Dachbereich (3) bzw. mit einer Strebe (2) ausgebildet ist.

4. Vorrichtung (1) nach einem der vorhergehenden Ansprüche, **dadurch gekennzeichnet, dass** die Schlinghilfe (6) T-förmig oder in Form eines winkelförmigen Hakens (9) ausgebildet ist.

5. Vorrichtung (1) nach Anspruch 4, **dadurch gekennzeichnet, dass** ein Schenkel (7) der Schlinghilfe (6) von dem Dachbereich (3) bzw. von der Strebe (2) im Wesentlichen vertikal abragt.

6. Vorrichtung (1) nach einem der vorhergehenden Ansprüchen, **dadurch gekennzeichnet, dass** eine Mehrzahl von Schlinghilfen (6, 9) an dem Dachbereich (3) und/oder an zumindest einer Strebe (2) ausgebildet sind.

7. Vorrichtung (1) nach einem der vorhergehenden Ansprüchen, **dadurch gekennzeichnet, dass** zumindest eine Strebe (2) an ihrem unteren Ende einen Befestigungsanker (11) aufweist, der zur Verankerung im Erdreich dient.

8. Vorrichtung (1) nach Anspruch 7, **dadurch gekennzeichnet, dass** der Befestigungsanker in Form eines Widerhakens (11) ausgebildet ist.

9. Vorrichtung (1) nach Anspruch 8, **dadurch gekennzeichnet, dass** der Widerhaken (11) zumindest einen Steg (12) aufweist, der von einem unteren Ende der Strebe (2) in einem kleinen spitzen Winkel in Richtung des oberen Endes der Strebe abragt.

10. Vorrichtung (1) nach einem der vorhergehenden Ansprüchen, **dadurch gekennzeichnet, dass** der Dachbereich (3) aus einer Mehrzahl von Stegen (4) gebildet ist, die einenends mit einer jeweiligen Strebe (2) und anderenends miteinander verbunden sind.

11. Vorrichtung (1) nach einem der vorhergehenden Ansprüchen, **dadurch gekennzeichnet, dass** die Vorrichtung (1) vollständig aus Kunststoff hergestellt ist, vorzugsweise durch Spritzgießen.
